# EUROPÄISCHE PATENTANMELDUNG

(11) **EP 1 033 230 A1**
(43) Veröffentlichungstag der Anmeldung: **06.09.2000**
(21) Anmeldenummer: 00103340.6
(22) Anmeldetag: 21.02.2000
(51) Int. Cl.: B29C 67/24, B29C 33/36, B29B 7/76, B29D 31/515

(54) **Verfahren und Vorrichtung zum Herstellen von Kunststoff-Formteilen aus einem fliessfähigen Reaktionsgemisch**

(30) Priorität: 04.03.1999 DE 19909438
(71) Anmelder: BAYER AG, 51368 Leverkusen (DE); Hennecke GmbH, 51379 Leverkusen (DE)
(72) Erfinder: Wirth, Jürgen, 51147 Köln (DE); Müller, Wolfgang, 53547 Hümmerich (DE); Grimm, Wolfgang, 51381 Leverkusen (DE); Brecht, Klaus, 51399 Burscheid (DE)

(57) **Zusammenfassung**

Das Herstellen von Kunststoff-Formteilen aus einem fließfähigen Reaktionsgemisch, insbesondere das Anbringen von Schuhsohlen an Schuhschäfte, lässt sich bei weniger Abfall dadurch vereinfachen und beschleunigen, indem das schussweise in einem Mischkopf (7) hergestellte Reaktionsgemisch über ein Auslaufrohr in daran vorbeigeführte Formwerkzeuge (9) eingebracht wird, wobei Mischkammer und Auslaufrohr (8) während der Wartezeiten zwischen zwei Schüssen durch ein Verschlussorgan gefüllt gehalten werden, und wobei die Startzeit der Reaktion des verwendeten Reaktionsgemisches maximal der Wartezeit zwischen dem Ende eines Schusses und dem Beginn des nächsten Schusses entspricht, so dass das verbliebene Reaktionsgemisch jeweils für die Herstellung des nächsten Formteils verwendbar ist.

## Beschreibung

Die Erfindung betrifft ein Verfahren und eine Vorrichtung zum Herstellen von Kunststoff-Formteilen aus einem fließfähigen Reaktionsgemisch, welches schuss-weise aus fließfähigen Reaktionskomponenten in der Mischkammer eines Mischkopfes hergestellt und über ein Auslaufrohr in aufeinanderfolgend daran vorbeigeführte Formwerkzeuge eingebracht wird, und wobei die Kunststoff-Formteile nach dem Aushärten entformt werden.

Hierzu bedient man sich im allgemeinen eines umlaufenden Werkzeugträgers in Form eines sogenannten Rundtisches oder endlosen Bandes, auf welchem eine Vielzahl von Formwerkzeugen angeordnet ist. Durch Weiterbewegen des Werkzeugträgers wird jeweils das nächste Formwerkzeug zum Füllen seiner Kavität für ein ausreichendes Zeitintervall unter dem Mischkopf bzw. Auslaufrohr plaziert. Dabei entspricht ein Zeitintervall zum Füllen einer Kavität jeweils im wesentlichen einer Schusszeit. Die Weiterbewegung erfolgt bei feststehendem Mischkopf taktweise oder der Werkzeugträger läuft kontinuierlich um, wobei der Mischkopf zum Befüllen eines Formwerkzeuges jeweils angedockt und ein entsprechendes Stück mitbewegt wird, um die Zykluszeit zwischen den Füllungen zu minimieren. Nach jedem Schuss müssen der Mischkopf und das Auslaufrohr von anhaftenden und ausreagierenden Gemischresten gereinigt werden, und zwar in der Regel mechanisch.

Es besteht die Aufgabe, eine Möglichkeit zu finden, die für die Reinigung erforderliche Zeit zu eliminieren bzw. zumindest zu verkürzen und gleichzeitig den durch die Reinigung verursachten Verlust an Reaktionsgemisch zu vermeiden bzw. zu vermindern.

Diese Aufgabe wird dadurch gelöst, dass zu Beginn eines neuen Produktionszyklus Mischkammer und Auslaufrohr mit einem Reaktionsgemisch gefüllt werden, dessen Startzeit der Reaktion minimal der Wartezeit zwischen dem Ende eines Schusses und dem Beginn des nächsten Schusses entspricht, dass während dieser Wartezeiten die Gemischherstellung unterbrochen wird, aber sowohl Mischkammer als auch Auslaufrohr mit Reaktionsgemisch gefüllt gehalten werden und erst zum Ende eines jeden Produktionszyklus Mischkammer und Auslaufrohr gereinigt werden.

Dabei versteht sich, dass die Wartezeit zwischen dem Ende eines Schusses und dem Beginn des nächsten Schusses maximal jener Zeit entsprechen soll, welche benötigt wird, um ein Reagieren der Reaktionskomponenten in der Mischkammer und im Auslaufrohr zu vermeiden und das nächste Formwerkzeug einfüllbereit unter dem Mischkopf zu plazieren. Die von der Aushärtezeit abhängige Entnahmezeit nach dem Füllen des Formwerkzeuges ist aber durch eine entsprechende Anzahl von Formwerkzeugen auf dem Formenträger auf die mögliche Schussfrequenz abstimmbar.

Unter "Produktionszyklus" ist dabei jene Zeitspanne zu verstehen, welche benötigt wird, um eine vorgegebene Menge gleichartiger Formteile zu fertigen, wobei Arbeitsunterbrechungen, wie Pausen- oder Reparaturzeiten, sowie Schichtunterbrechungen unberücksichtigt bleiben.

Durch das neue Verfahren wird erreicht, dass die Reinigung von Mischkammer und Auslauftohr im wesentlichen entfällt. Da das Zeitintervall zum Plazieren eines neuen Formwerkzeuges unter dem Mischkopf maximal der Startzeit der Reaktion des nach dem vorhergehenden Schuss in der Mischkammer und dem Auslaufrohr verbliebenen Reaktionsgemisches entspricht, kann dieses verbliebene Reaktionsgemisch beim nächsten Schuss verlustfrei in die Kavität eingebracht werden. Zeit- und/oder Materialverlust entstehen nur noch zu Beginn und Ende eines neuen Produktionszyklus oder bei Arbeitsunterbrechungen. Dies kann mit dem Schichtbeginn und -ende sowie Produktionspausen zusammenfallen, aber auch beim Übergang auf andere Parameter für neue Kunststoff-Formteile, wie beispielsweise auf ein anderes Reaktionsgemisch oder auf eine andere Farbgebung für gleichartige Kunststoff-Formteile. Bei anderer Farbgebung werden eine anfängliche, durch eingeschlossene Luftschlieren verursachte Farbveränderung und dadurch verursachte Ausschussteile eliminiert.

Von besonderem Vorteil ist dabei auch die Tatsache, dass bei jedem neuen Schuss die Reaktionskomponenten in die gefüllte Mischkammer eingedüst werden. Die vorhandene Füllung sorgt für eine bessere Verteilung und Vermischung, so dass bisher durch ungenügende Vermischung zu Anfang und Ende eines Schusses im Formteil verursachte Fehlerstellen nicht mehr vorkommen. Wird das Reaktionsgemisch in ein offenes Formwerkzeug gegossen, ist das erzeugte Kunststoff-Formteil angusslos; beim Anspritzen in einem geschlossenen Formwerkzeug entsteht ein geringer Anguss.

Das neue Verfahren zeichnet sich insbesondere bei der Anwendung für das Anbringen von Schuhsohlen an Schuhschäfte in Formwerkzeugen aus.

Schuhsohlen an Schäfte anzugießen oder anzuspritzen ist zwar bekannt, aber gerade hier machen sich die zuvor erwähnten Vorteile bemerkbar, so dass Schuhsohlen in der Regel keine Fehlerstellen mehr aufweisen und dadurch haltbarer sind. Außerdem werden mittels des neuen Verfahrens der Produktionsablauf beschleunigt und Farbabweichungen vermieden.

Bei der Anwendung zum Anbringen von Schuhsohlen an Schuhschäfte in Formwerkzeugen, welche aus einem Bodenstempel mit Laufsohlenkavität, Formbacken und einem Leisten bestehen, wobei ein Mischopf zum Anbringen der Laufsohle an einen Schuhschaft verwendet wird, ist das neue Verfahren dadurch gekennzeichnet, dass während des Produktionszyklus in aufeinanderfolgenden Arbeitgängen jeweils die Laufsohlenkavität mit einem Reaktionsgemisch gefüllt wird, wobei die Wartezeit zwischen dem Ende eines Schusses und dem Beginn des jeweils nächsten Schusses kleiner bzw. gleich groß als die Startzeit der Reaktion des verwendeten Reaktionsgemisches ist, dass die Laufsohle ausgehärtet wird, und dass der fertige Schuh entformt und vom Leisten abgenommen wird.

Bei der Anwendung zum Anbringen von Laufsohlen und Zwischensohlen an Schuhschäften in Formwerkzeugen, welche aus einem Bodenstempel mit Laufsohlenkavität, Formbacken mit Zwischensohlenanguss, einem Blindleisten mit Wechseladapter und einem Leisten für den gleichen Wechseladapter bestehen, wobei ein erster Mischkopf zum Anbringen der Laufsohle und ein zweiter Mischkopf zum Anbringen der Zwischensohle an einen Schuhschaft verwendet werden, ist das neue Verfahren dadurch gekennzeichnet, dass während des Produktionszyklus in aufeinanderfolgenden Arbeitsgängen jeweils die Laufsohlenkavität mit einem ersten Reaktionsgemisch gefüllt und dieses ausgehärtet wird, dass der Blindleisten gegen den Leisten ausgewechselt wird, dass mit dem zweiten Mischkopf ein zweites Reaktionsgemisch in die Zwischensohlenkavität eingebracht wird, wobei die Wartezeit zwischen dem Ende eines Schusses und dem Beginn des nächsten Schusses maximal der kürzesten der Startzeiten von beiden Reaktionsgemischen entspricht, dass die Zwischensohle ausgehärtet wird, und dass der fertige Schuh entformt und vom Leisten abgenommen wird.

Man wird versuchen, die Startzeiten der Reaktionen beider Reaktionsgemische möglichst gleich groß zu machen, da dies verfahrensmäßig günstig ist. Bei entsprechender Gestaltung des Formwerkzeuges lässt sich ein Anguss vermeiden.

In vorteilhafter Weise wird ein Hochdruckmischkopf verwendet.

Dadurch ist es möglich, die Kavität des Formwerkzeuges besonders schnell mit dem Reaktionsgemisch zu füllen. Besitzt dieser Mischkopf auch noch einen Ausstoßkolben, dann lassen sich damit Mischkammer und Auslauftohr auch in den wenigen verbliebenen notwendigen Fällen, wie u.a. Schichtende, ohne Schwierigkeiten reinigen.

Vorzugsweise wird ein Reaktionsgemisch verwendet, welches in der Mischkammer eines Mischkopfes bei einer Temperatur von 20 bis 60°C und bei Drücken von 150 bis 300 bar vermischt und innerhalb von 0,1 bis 5 sec bei einer Austragsleistung von 60 bis 300 g/sec in offene Formwerkzeuge eingetragen wird und innerhalb einer Formstandzeit von 30 bis 150 sec ausreagiert.

Mit dieser Verfahrensweise werden neben der Erzielung der erfindungsgemäßen Vorteile auch dem beschleunigten Verfahrensablauf und damit der optimalen Ausnutzung der Herstellungsanlage Rechnung getragen. Dabei wird das Reaktionsgemisch in vorteilhafter Weise in ein offenes Formwerkzeug eingebracht.

Vorzugsweise beträgt die Startzeit des Reaktionsgemisches maximal 5 sec.

Die Startzeit von Reaktionsgemischen ist an sich kürzer. Aber aus den dargelegten Gründen bietet eine auf maximal etwa 5 sec verlängerte Startzeit für den beschleunigten Verfahrensablauf die beschriebenen Vorteile. Eine noch längere Startzeit würde zu Lasten des Durchsatzes gehen.

Zur Durchführung des neuen Verfahrens wird vorzugsweise ein Reaktionsgemisch verwendet, bestehend aus:
a. einem Isocyanat, wie Diisocyanat Diphenylmethan, Toluoldiisocyanat, sowie Mischungen aus diesen mit teilweise carbodiimidierten Isocyanaten in vorverlängerter Form mit einem NCO-Gehalt von 5 bis 30 %, wobei zur Vorverlängerung Polyether oder Polyester des nachstehend beschriebenen Aufbaus verwendet werden,
b. einem Polyol wie Polyester- oder Polyetherpolyolen der Hydroxylfunktionalität 2.00 oder ein Gemisch mit einer mittleren OH-Funktionalität von 2.00 bis 3.00 mit Molgewichten zwischen 1000 und 8000 g/Mol mit folgendem Aufbau:
ba. Polyetherdiole des OH-Zahlbereiches von 10 bis 115 mg KOH, gewotmen durch Propoxylierung eines di- oder trifunktionellen Starters und anschließender Ethoxylierung des Propoxylierungsproduktes mit Ethylenoxidanteilen von 15 bis 40 %, welche gegebenenfalls Füllstoffe von Styrol-Acrylnitril-Copolymerisat, Polyharnstoffen oder Polyhydroxocarbonamiden bis zu 20 % enthalten, und/oder
bb. Polyesterpolyole entsprechender OH-Zahl auf Adipin-, Bernstein- und/oder Glutarsäurebasis, umgesetzt mit Butandiol- 1,4, Isobutylglykol, Hexandiol, Neopentylglykol, Glyzerin und /oder Trimethylolpropan,
c. typische NH- und/oder OH-funktionelle Kettenverlängerer, wie Butandiol, Isobutylglykol, Diethylenglykol, Ethandiol, Neopentylglykol, Hexandiol, Triethanolamin, Trimethylolpropan, Glycerin, Diethyltoluoldiamin, Toluoldiamin, Diaminoethylbenzolsäure und/oder Butylester, Diaminodiethylbenzol, Dimethylthiotoluoldiamin,
d. zum Einstellen der Rohdichte übliche Treibmitttel wie H₂O, Kohlendioxid, Pentane und /oder Hydrofluoralkane,
e. als Katalysatoren bekannte Aktivatoren, wie tertiäre Amine, Zinn- und Titanverbindungen,
f. gegebenenfalls als Hilfsstoffe Antistatika auf der Basis quartärer Ammoniumsulfate Stabilisatoren, Zellregler wie Siliconglykolcopolymere, Weichmacher wie Dioctyl- phtalat, Farbstoffe oder Farbpaste.

Vorzugsweise werden dabei die Komponenten b) bis f) als vorvermischter Strom der Mischkammer zugeführt.

Solche Formulierungen eignen sich besonders zum Angießen von Laufsohlen und/oder im kombinierten Angieß- und Anspritzverfahren zum Anbringen von Laufsohlen und Zwischensohlen. Allgemein gesagt, muss zur Durchführung des neuen Verfahrens der Aufbau der zum Einsatz kommenden Polyurethan-Systeme in der Reaktionskinetik so abgestimmt sein, dass das erfindungsgemäße Arbeiten mit dabei stets gefüllter Mischkammer und Auslaufrohr möglich ist. Durch Wahl der Katalysatorkonzentration in Verbindung mit der Reaktivität der einzelnen Rezepturbestandteile lässt sich gewährleisten, dass das flüssige Reaktionsgemisch während einer bestimmten Zeit, d.h. vorzugsweise < 5 sec, gieß- bzw. spritzfähig bleibt.

Die neue Erfindung richtet sich auch auf eine Vorrichtung zum Herstellen von Kunststoff-Formteilen aus einem aus mindestens zwei Reaktionskomponenten bestehenden Reaktionsgemisch, bestehend aus mindestens einem Mischkopf, welcher mit Vorratsbehältern für die Reaktionskomponenten verbunden ist, sowie aus einem kontinuierlich oder mit variablen Geschwindigkeiten umlaufenden Formwerkzeugträger mit mehreren Formwerkzeugen, wobei der Mischkopf mit einer Mischkammer und einem Auslaufrohr versehen ist.

Das Neue ist darin zusehen, dass das Ende des Auslaufrohres ein Verschlussorgan mit einer auf die Schusszeit abgestimmten Steuerung aufweist und dass diese Steuerung das Verschlussorgan jeweils während eines Schusses geöffnet und jeweils während des Endes eines Schusses bis zum Beginn des nächsten Schusses geschlossen hält.

Handelt es sich um einen Ausstoßkolbenmischkopf, wie sie allgemein bekannt sind, besteht das Verschlussorgan beispielsweise aus einem Querschieber mit einer Auslassöffnung, welche dem Querschnitt des Ausstoßkolbens entspricht. Um die Mischkammer und das Auslaufrohr gefüllt zu halten, verschließt dieser Querschieber das Auslaufrohr. Für den Schuss wird die Auslauföffnung des Querschiebers mit dem Ende des Auslaufrohres zur Deckung gebracht. Außerdem wird in dieser Position ermöglicht, dass der Ausstoßkolben erforderlichenfalls zum Reinigen in die Auslauföffnung hineinfahren kann. Dabei ist der Mischkopf entweder stationär angeordnet, wobei der Formwerkzeugträger taktweise bewegt wird, um die Formwerkzeuge nacheinander zu füllen, oder der Formwerkzeugträger läuft kontinuierlich um und der Mischkopf wird durch Andocken mitbewegt, um möglichst kurze Zykluszeiten zu erzielen.

Vorzugsweise besteht der Mischkopf aus einem Hochdruckmischkopf.

Ein solcher trägt dazu bei, die Fertigungszeiten zu verkürzen.

In einer Zeichnung ist die neue Vorrichtung im Zusammenhang mit der Durchführung des neuen Verfahrens dargestellt und nachstehend näher beschrieben. Es zeigen:
- Fig. 1: eine Vorrichtung zum Anbringen von Laufsohlen an Sehuhschäfte in der Draufsicht,
- Fig. 2: eine Vorrichtung zum Anbringen von Laufsohlen und Zwischensohlen an Schuhschäfte in der Draufsicht,
- Fig. 3: einen Hochdruckmischkopf mit einem Querschieber als Verschlussorgan und einem Auslaufrohr im Schnitt,
- Fig. 4 bis 8: ein Formwerkzeug mit offener Laufsohlenkavität und geschlossener Zwischensohlenkavität im Schnitt.

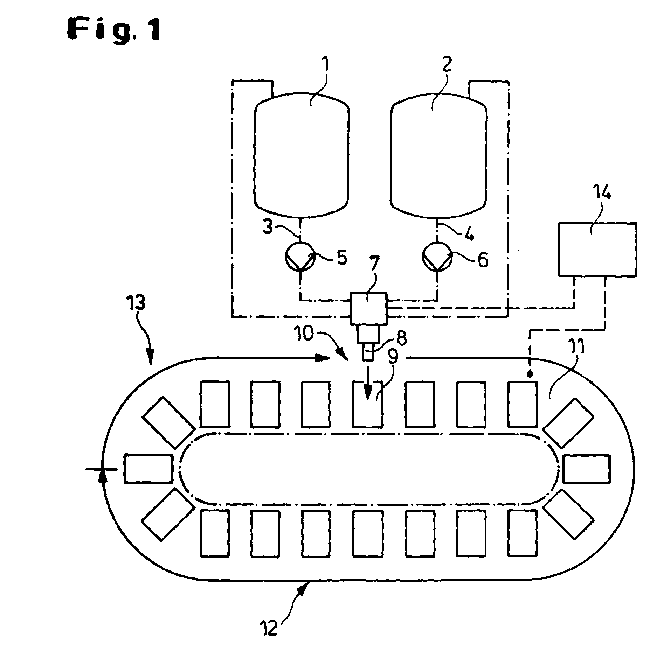

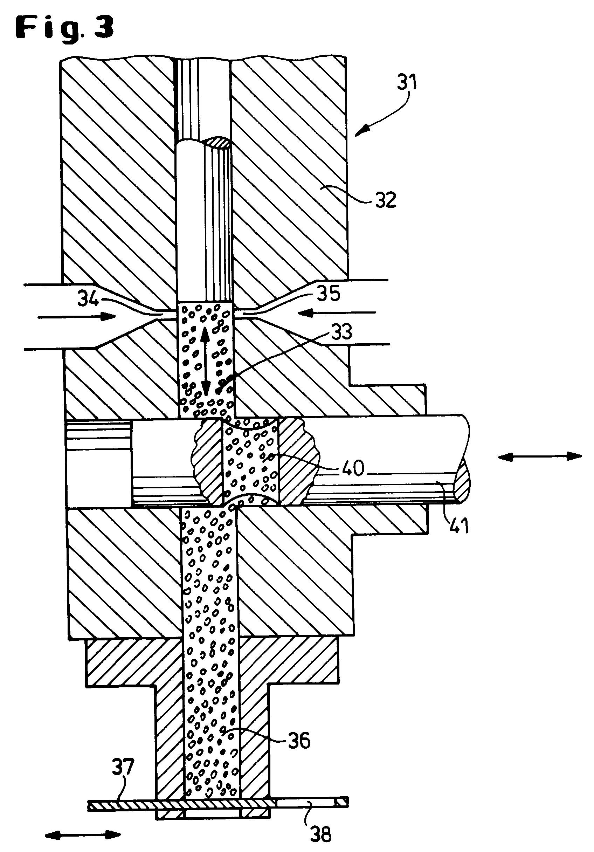

In Fig. 1 besteht die Vorrichtung aus Vorratsbehältern 1, 2 für die Reaktionskomponenten Isocyanat und Polyol, von denen Zuleitungen 3, 4 über Dosierpumpen 5, 6 zu einem andockbaren und mitbewegbaren Mischkopf 7 führen, welcher gemäß Fig. 3 aufgebaut ist. Unter dem Auslaufrohr 8 des Mischkopfes 7 ist jeweils ein zu befüllendes Formwerkzeug 9 angeordnet, und zwar an der sogenannten Füllstation 10. Eine Mehrzahl von diesen Formwerkzeugen 9 ist auf einem umlaufenden Band 11 angeordnet. An diese Füllstation 10 schließt sich eine Aushärtezone 12 an und an diese eine Entnahmezone 13. Der Mischkopf 7 und das umlaufende Band 11 sind mit einem gemeinsamen Steuergerät 14 verbunden.

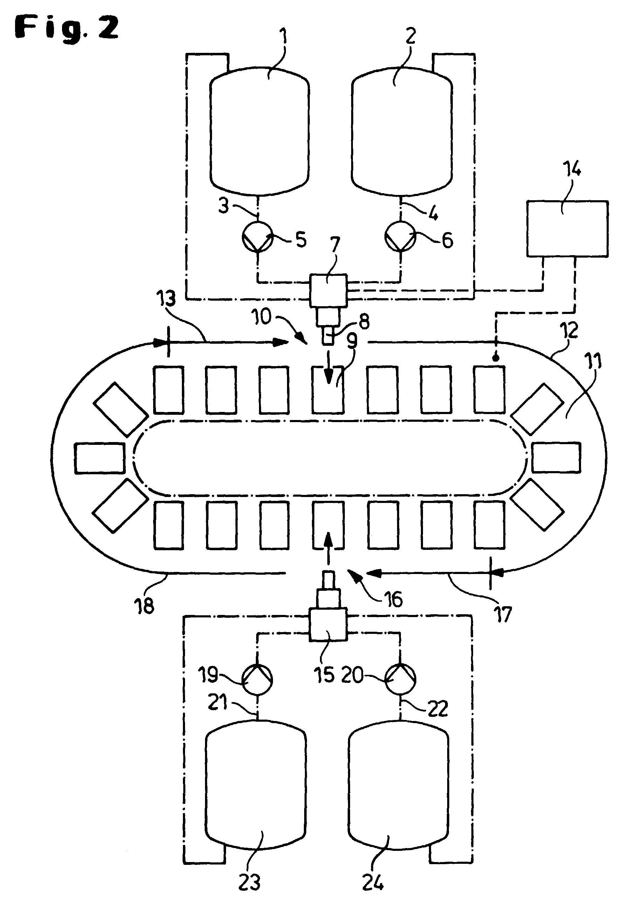

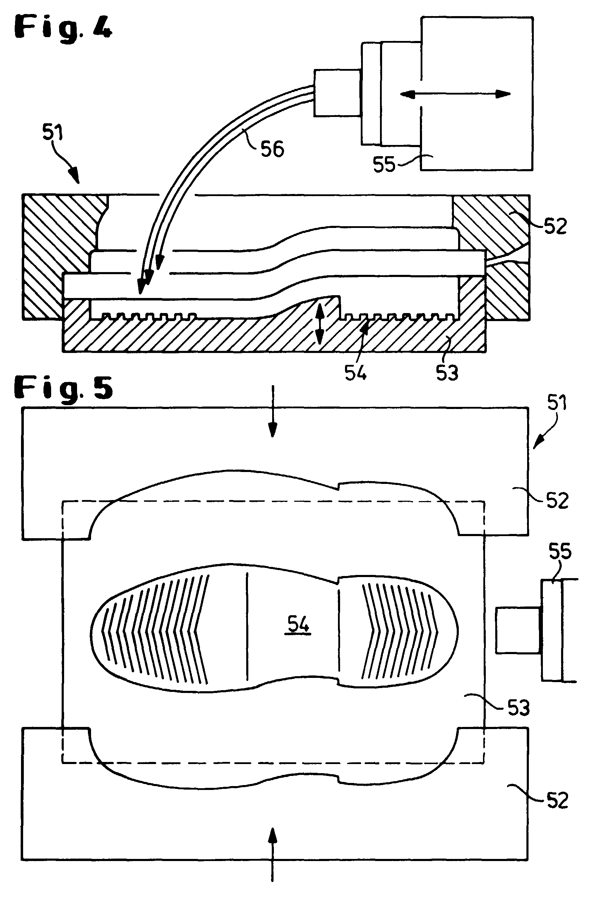

Die Vorrichtung gemäß Fig. 2 ist im wesentlichen in gleicher Weise aufgebaut. Deshalb sind die bisherigen Bezugszeichen gemäß Fig. 1 verwendet und lediglich ergänzt worden. Da diese Vorrichtung zum Anbringen von Laufsohlen und zusätzlich von Zwischensohlen an Schuhschäfte konzipiert ist, ist ein andockbarer und mitbewegbarer zweiter Mischkopf 15 mit Füllstation 16 vorgesehen. Deshalb ist hinter der Aushärtezone 12, aber vor diesem Mischkopf 15, eine Wechselstation 17 zum Wechseln eines ursprünglichen Blindleistens gegen einen Schuhleisten mit aufgezogenem Schuhschaft vorgesehen, wie es in Fig. 4 bis 7 dargestellt und beschrieben ist. Hinter dem zweiten Mischkopf 15 schließt eine zweite Aushärtezone 18 und erst dahinter die Entnahmezone 13 an. Der Mischkopf 15 ist über Dosierpumpen 19, 20 enthaltende Zuleitungen 21, 22 mit Vorratsbehältern 23, 24 für ein weiteres Isocyanat bzw. Polyol zum Anspritzen der Zwischensohle verbunden. Zu Einzelheiten des Formwerkzeuges wird auf Fig. 4 bis 7 verwiesen.

Gemäß Fig. 3 sind die Vorrichtungen gemäß Fig 1, 2 mit Mischköpfen 7, 15 versehen, welche als Ausstoßkolbenmischköpfe 31 gestaltet sind. Ein solcher Ausstoßkolbenmischkopf 31 besteht aus einem Gehäuse 32 mit einer Mischkammer 33, in welche Einlass- öffnungen 34, 35 für die Reaktionskomponenten münden. An die Mischkammer 33 schließt ein Auslaufrohr 36 an, welches durch ein als Querschieber ausgebildetes Verschlussorgan 37 abschließbar ist. Dieses Verschlussorgan 37 besitzt eine Durchlassöffnung 38, deren Querschnitt dem eines Ausstoßkolbens 39 entspricht, wobei der Ausstoßkolben 39 durch die Mischkammer 33, durch die Öffnung 40 eines zwischen Mischkammer 33 und Auslaufrohr 36 angeordneten Querschiebers 41 sowie durch das Auslaufrohr 36 bis in die Durchlassöffnung 38 einschiebbar ist.

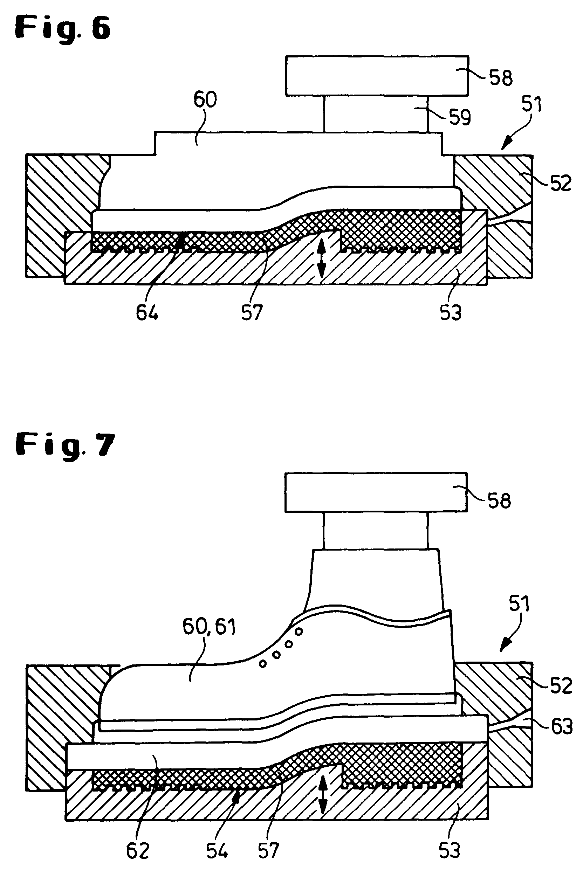

Gemäß Fig. 4 bis 7 besteht das Formwerkzeug 51 aus Formbacken 52, welchen ein dazu senkrecht verschiebbarer Bodenstempel 53 zugeordnet ist. Dieser weist eine Laufsohlenkavität 54 auf. In das zunächst offene Formwerkeug 51 lässt sich, wie angedeutet, mit einem Mischkopf 55 eine dosierte Menge Reaktionsgemisch 56 in die Laufsohlenkavität 54 eingießen. Fig. 6 zeigt die gebildete Laufsohle 57, welche mittels eines an einem Wechseldapter 58 angeordneten Blindleistens 59 von oben abgedeckt ist. Ist die Laufsohle 57 ausgehärtet, wird in einer Wechselzone 60 der Blindleisten 59 vom Wechseladapter 58 abgenommen und gegen einen Leisten mit aufgezogenem Schuhschaft 61 ausgetauscht. Das Ergebnis ist in Fig. 7 dargestellt. Die Formbacken 52 umschließen den aufgezogenen Schuhschaft 61. Der Bodenstempel 53, welcher die Laufsohle 57 enthält, ist zurückgefahren, so dass zwischen der Laufsohle 57 und dem Leisten 60 bzw. Schuhschaft 61 ein Zwischenraum 62 gebildet ist. Dieser ist durch einen Angusskanal 63 mit einem die nicht dargestellte Zwischensohle 65 bildenden Reaktionsgemisch befüllbar. Durch Anheben des Bodenstempels 53 wird anschließend aus diesem Zwischenraum 62 die Zwischensohlenkavität 64 gebildet. Dabei wird der Angusskanal 63 verschlossen. Nach dem Aushärten der Zwischensohle 65 lässt sich der fertige Schuh entnehmen und der entstandene Zwischensohlenanguss entfernen.

## Patentansprüche

1. Verfahren zum Herstellen von Kunststoff-Formteilen aus einem fließfähigen Reaktionsgemisch, welches schussweise aus fließfähigen Reaktionskomponenten in der Mischkammer (33) eines Mischkopfes (7, 15; 31) hergestellt und über ein Auslaufrohr (8; 36) in aufeinanderfolgend daran vorbeigeführte Formwerkzeuge (9; 51) eingebracht wird, und wobei die Kunststoff-Formteile nach dem Aushärten entformt werden, dadurch gekennzeichnet, dass zu Beginn eines jeden Produktionszyklus Mischkammer (33) und Auslaufrohr (8; 36) mit einem Reaktionsgemisch (56) gefüllt werden, dessen Startzeit der Reaktion minimal der Wartezeit zwischen dem Ende eines Schusses und dem Beginn des nächsten Schusses entspricht, dass während dieser Wartezeiten die Gemischherstellung unterbrochen wird, aber sowohl Mischkammer (33) als auch Auslaufrohr (8; 36) mit Reaktionsgemisch gefüllt gehalten werden, und erst zum Ende eines jeden Produktionszyklus Mischkammer (33) und Auslaufrohr (8; 36) gereinigt werden.

2. Verfahren nach Anspruch 1, gekennzeichnet durch die Anwendung für das Anbringen von Schuhsohlen (57) an Schuhschäfte (61) in Formwerkzeugen (9; 51).

3. Verfahren nach Anspruch 2 bei der Anwendung zum Anbringen von Schuhsohlen (57) an Schuhschäfte (61) in Formwerkzeugen (9; 53), welche aus einem Bodenstempel (53) und Laufsohlenkavität (54), Formbacken (52) und einem Leisten (60) bestehen, wobei ein Mischkopf (7; 55) zum Anbringen der Laufsohle (57) an einem Schuhschaft (61) verwendet wird, dadurch gekennzeichnet, dass während des Produktionszyklus in aufeinanderfolgenden Arbeitsgängen jeweils die Laufsohlenkavität (54) mit einem Reaktionsgemisch (56) gefüllt wird, wobei die Wartezeit zwischen dem Ende eines Schusses und dem Beginn des jeweils nächsten Schusses kleiner bzw. gleich groß ist als die Startzeit der Reaktion des verwendeten Reaktionsgemisches (56), dass die Laufsohle (57) ausgehärtet wird, und dass der fertige Schuh entformt und vom Leisten (60) abgenommen wird.

4. Verfahren nach Anspruch 2 bei der Anwendung zum Anbringen von Laufsohlen (57) und Zwischensohlen (65) an Schuhschäfte (61) in Formwerkzeugen (9;51), welche aus einem Bodenstempel (53) und Laufsohlenkavität (54), Formbacken (52) mit Zwischensohlenangusskanal (63), einem Blindleisten (59) mit Wechseladapter (58) und einem Leisten (60) für den gleichen Wechseladapter (58) bestehen, wobei ein erster Mischkopf (7; 31) zum Anbringen der Laufsohle (57) und ein zweiter Mischkopf (15; 31) zum Anbringen der Zwischensohle (65) an einen Schuhschaft (61) verwendet werden, dadurch gekennzeichnet, dass während des Produktionszyklus in aufeinanderfolgenden Arbeitsgängen jeweils die Laufsohlenkavität (54) mit einem ersten Reaktionsgemisch (56) gefüllt und dieses ausgehärtet wird, dass der Blindleisten (59) gegen den Leisten (60) mit aufgezogenem Schuhschaft (61) ausgewechselt wird, dass mit dem zweiten Mischkopf (15;31) ein zweites Reaktionsgemisch in eine Zwischensohlenkavität (62) eingebracht wird, wobei die Wartezeit zwischen dem Ende eines Schusses und dem Beginn des jeweils nächsten Schusses maximal der kürzesten der Startzeiten von beiden Reaktionsgemischen entspricht, dass die Zwischensohle (65) ausgehärtet wird und dass der fertige Schuh entformt und vom Leisten (60) abgenommen wird.

5. Verfahren nach einem der Ansprüche 1 bis 4, dadurch gekennzeichnet, dass ein Hochdruckmischkopf (33) verwendet wird.

6. Verfahren nach einem der Ansprüche 1 bis 5, dadurch gekennzeichnet, dass ein Reaktionsgemisch verwendet wird, welches in der Mischkammer (33) eines Mischkopfes (7, 15; 31; 55) bei einer Temperatur von 20 bis 60°C und bei Drücken von 150 bis 300 bar vermischt und innerhalb von 0,1 bis 5 sec bei einer Austragsleistung von 60 bis 300 g/sec in Formwerkzeuge (9; 51) eingetragen wird und innerhalb einer Formstandzeit von 30 bis 150 sec ausreagiert.

7. Verfahren nach einem der Ansprüche 1 bis 5, dadurch gekennzeichnet, dass die Startzeit des Reaktionsgemisches maximal 5 sec beträgt.

8. Verfahren nach einem der Ansprüche 1 bis 7, dadurch gekennzeichnet, dass ein Reaktionsgemisch verwendet wird, bestehend aus:
a. einem Isocyanat, wie Diisocyanat, Diphenylmethan, Toluoldiisocyanat, sowie Mischungen aus diesen mit teilweise carbodiimidierten Isocyanaten in vorverlängerter Form mit einem NCO-Gehalt von 5 bis 30 %, wobei als Vorverlängerer Polyether oder Polyester des nachstehend beschriebenen Aufbaus verwendet werden,
b. einem Polyol,
wie Polyester- oder Polyetherpolyole der Hydroxylfunktionalität 2.00 oder ein Gemisch mit einer mittleren OH-Funktionalität von 2.00 bis 3.00 mit Molgewichten zwischen 1000 und 8000 g/Mol mit folgendem Aufbau:
ba. Polyetherdiole des OH-Zahlbereiches von 10 bis 115 mg KOH, gewonnen durch Propoxylierung eines di- oder trifunktionellen Starters und anschließender Ethoxylierung des Propoxylierungsproduktes, welche Ethylenoxidanteile von 15 bis 40 %, und gegebenenfalls Füllstoffen von Styrrol-Acrylnitril-Copolymerisat, Polyharnstoffe oder Polyhydroxocarbonamiden bis zu 20 % enthalten, und /oder
bb. Polyesterpolyole entsprechender OH-Zahl auf Adipin-, Bernstein- und/oder Glutarsäurebasis, umgesetzt mit Butandiol-1,4, Isobutylglykol, Hexandiol, Neopentylglykol, Glyzerin und/oder Trimethylolpropan,
c. typische NH- und/oder OH-funktionelle Kettenverlängerer, wie Butandiol, Isobutylglykol, Diethylenglykol, Ethandiol, Neopentylglykol, Hexandiol, Triethanolamin, Trimethylolpropan, Glycerin, Diethyltoluoldiamin, Toluoldiamin, Diaminoethylbenzolsäure und/oder Butylester, Diaminodiethylbenzol, Dimethylthiotoluoldiamin,
d. zum Einstellen der Rohdichte übliche Treibmitttel wie H₂O, Kohlendioxid, Pentane und/oder Hydrofluoralkane,
e. als Katalysatoren bekannte Aktivatoren, wie tertiäre Amine, Zinn- und Titanverbindungen,
f. gegebenenfalls als Hilfsstoffe Antistatika auf der Basis quartärer Ammoniumsulfate, Stabilisatoren, Zellregler wie Siliconglykolcopolymere, Weichmacher wie Dioctylphtalat, Farbstoffe oder Farbpasten.

9. Vorrichtung zum Herstellen von Kunststoff-Formteilen aus einem aus mindestens zwei Reaktionskomponenten bestehenden Reaktionsgemisch, bestehend aus mindestens einem Mischkopf (7, 15; 33; 55), welcher mit Vorratsbehältern (1, 2 bzw. 22, 23) für die Reaktionskomponenten verbunden ist, sowie aus einem umlaufenden Formwerkzeugträger (11) mit mehreren Formwerkzeugen (9; 52), wobei der Mischkopf (7, 15; 33; 55) mit einer Mischkammer (33) und einem Auslaufrohr 8; 36) versehen ist, dadurch gekennzeichnet, dass das Ende des Auslaufrohres (8; 38) ein Verschlussorgan (37) mit einer auf die Schusszeit abgestimmten Steuerung (14) aufweist, und dass diese Steuerung das Verschlussorgan (37) jeweils während eines Schusses geöffnet und jeweils während des Endes eines Schusses und dem Beginn des nächsten Schusses geschlossen hält.

10. Vorrichtung nach Anspruch 9, dadurch gekennzeichnet, dass der Mischkopf (7, 15) aus einem Hochdruckmischkopf (33) besteht.
